# EUROPEAN PATENT SPECIFICATION

(11) **EP 1 791 687 B1**
(45) Date of publication and mention of the grant of the patent: **28.05.2008**
(21) Application number: 05783788.2
(22) Date of filing: 15.09.2005
(51) Int. Cl.: B29D 11/00, B29C 35/08

(54) **PROCESS AND APPARATUS FOR THE PRODUCTION OF MOULDINGS, ESPECIALLY OPHTHALMIC LENSES**
VERFAHREN UND VORRICHTUNG ZUR HERSTELLUNG VON FORMTEILEN, V.A. KONTAKTLINSEN
PROCEDE ET DISPOSITIF DE FABRICATION DE MOULAGES, NOTAMMENT DE LENTILLES OPHTALMIQUES

(30) Priority: 16.09.2004 EP 04022048
(43) Date of publication of application: 06.06.2007
(73) Proprietor: Novartis AG, 4056 Basel (CH)
(72) Inventor: HEINRICH, Axel, 63743 Aschaffenburg (DE); SEIFERLING, Bernhard, 63773 Goldbach (DE); HABERSTROH, Klaus, 78351 Bodman-Ludwigshafen (DE)
(74) Representative: Heinen, Detlef
(86) International application number: PCT/EP2005/009933
(87) International publication number: WO 2006/029865

(56) References cited:
- EP-A- 0 415 508
- EP-A- 1 314 527
- US-A- 5 415 816

## Description

The invention relates to a process and apparatus for the production of mouldings, especially ophthalmic lenses, such as contact lenses, according to the preamble of the respective independent patent claim.

In many production processes for mouldings, light is used, by means of which e.g. chemical reactions are initiated. This applies in particular (but not exclusively) to the production of contact lenses, especially the so-called "disposable contact lenses", which - as their name suggests - are intended for wearing once and are thrown away after wearing. These disposable contact lenses are produced more or less fully automatically in a highly automated production process. The principle of such a production process is described for example in WO-A-98/42497.

In that part of the production process that is of particular significance to the present invention, after closing the mould or moulding tool in which a number of moulds are arranged, the starting material (which comprises e.g. a prepolymer and a photoinitiator) previously introduced into the respective contact lens mould, usually into the female mould half, is exposed to UV light of a specific intensity for a specific period of time. Polymerisation and/or crosslinking of the starting material thereby takes place, so that subsequently the mould contains a contact lens, which given an appropriate configuration of the mould, does not have to undergo any finishing operations.

The UV light emitted from the light source, e.g. a UV lamp, is guided to the individual moulds by light guides, for example in accordance with WO-A-01/00393. Here, liquid light guides are used in particular. These have particularly good properties both in respect of the transmission of UV light and in respect of the usable cross-sectional area and the homogeneous distribution of intensity of the emitting UV light. Preferably, a separate light guide is assigned to each mould.

The polymerisation and/or crosslinking of the starting material initiated with the assistance of the photoinitiators can be controlled with high local definition, by restricting the incoming light bundle, for example using a mask. What is critical is the transitions from "light" to "shade", that is, the transition from areas at which light is still being applied and where polymerisation and/or crosslinking takes place (contact lens edge), to areas which are shaded by the screen and where consequently no polymerisation and/or crosslinking takes place.

A very strictly parallel light bundle always produces a sharply defined image of the edges of the screen and thus produces clean contact lens edges. Admittedly also, defects and impurities of the transparent area of the screen are reproduced in the photochemically polymerised and/or crosslinked contact lens. A less strictly parallel light bundle is more tolerant towards defects and impurities of the screen, though the sharpness, of the edge (contact lens edge) is also more critical, since the transition from "light" to "shade" is no longer so abrupt. This disadvantage can be at least partly eliminated by exposing the starting material to precisely the amount of light needed to complete polymerisation and/or crosslinking. This threshold can be accentuated by adding small concentrations of polymerisation inhibitors (e.g. radical N-oxides).

Thus, the starting material must be exposed as precisely as possible to the amount of light required for complete polymerisation and/or crosslinking to take place. To do so, it is important to know the exact amount of light to be applied to the starting material. With this in mind, the intensity of the UV light is measured. What must be taken into consideration here, however, is the fact that photoinitiators have a spectral absorption specific to them at a specific wavelength, which cannot be changed in the case of a given formulation. For example, if the average intensity of the radiated UV light at this specific wavelength is changed because of changes to the optical components (e.g. through an exchange of components, ageing, batch variations, etc.), then the amount of light may be too little or too great at the relevant wavelength at which the photoinitiator absorbs.

Basically, the amount of light that is absorbed by the photoinitiator and thereby initiates polymerisation and/or crosslinking can be calculated by convoluting the excitation spectrum, which acts on the starting material, with the absorption spectrum of the photoinitiator (or to be more precise, with the remaining spectrum which does not pass through the starting material; the transmission spectrum is determined in this way, and if the excitation spectrum is known, the absorption spectrum can be determined from this). To do this, however, spectrometers are required, which have only limited suitability for use in a production process. This is because, on the one hand, they are very expensive, and on the other hand, they are not very robust and require skilled personnel to operate them.

In practice, therefore, UV radiometers are frequently used. These have a photoreceiver (e.g. a photodiode) which is sensitive over the entire spectral range, as well as a filter arranged in front of them. However, the filters are not very complex and cover only a very roughly defined wavelength range, which frequently does not conform with the spectral absorption of the photoinitiator, so that the measurement of UV light represents only a very rough guide to the amount of excitation light actually effective.

A change (exchange, ageing, batch variations) of optical components (e.g. light sources, lenses, mirrors, filters, light guides or materials for moulds of screen carriers) already discussed above can therefore lead to a very varying spectral composition of the excitation light. However, without precise knowledge of the spectral change, the effects on the photoinitiator and also on the photoreceiver cannot be predicted. Therefore, the differing spectral sensitivity of photoreceiver and photoinitiator has a substantial detrimental effect on the safe exposure of the starting material to a minimal amount of light, which is desired for the above-mentioned reasons (accuracy of the edge). An amount of light that is far too great, on the other hand, can lead to polymer degradation and - depending on the wavelength - also to accelerated ageing of optical components (e.g. of liquid light guides).

EP-A-1314527 discloses the features of the preamble of the independent claims.

The problem underlying the present invention is to determine as precisely as possible the respective amount of excitation light at the wavelength of the spectral absorption of the photoinitiator, so that in the production process the relevant amount of light can always be controlled, namely the amount of light applied to the starting material at the wavelength of the spectral absorption of the photoinitiator.

This problem is solved by a process having the features of the independent process claim 1 and by apparatus having the features of the independent apparatus claim 9. Advantageous variants of the process or further embodiments of the apparatus can be seen from the features of the dependent claims.

The fundamental concept of the invention is to adapt a simple, broadband photoreceiver very precisely to the sensitivity of the photoinitiator, so that when there is a change in the excitation light impinging on the starting material containing the photoinitiator, the photoreceiver "notices" this change precisely at the relevant wavelength at which the photoinitiator has its spectral absorption. Here, the cause of the change in excitation light is irrelevant; the first priority is to control whether the amount of light impinging on the starting material lies within predetermined tolerances.

In particular, according to the invention, a process for the production of moulds, especially ophthalmic lenses, such as contact lenses, is proposed, in which a broadband photoreceiver is used to measure the intensity of light, in front of which photoreceiver a filter is arranged, the transmission of which is designed such that the light passing through the filter and impinging on the photoreceiver corresponds in its intensity to the light absorbed by the photoinitiator on the basis of its spectral absorption at the wavelength from the predetermined wavelength range. The filter is thus designed such that the photoreceiver "sees" the excitation light as the photoinitiator "sees" it. In this way, the process allows the amount of excitation light at the relevant wavelength, namely the wavelength at which the photoinitiator has its spectral absorption, to be continuously controlled.

The above process is basically suitable also for light of wavelengths other than those in the UV range, nevertheless in the production of contact lenses, normally UV light is used, since the photoinitiators typically employed absorb in the UV range.

In a variant of the process according to the invention, a photoinitiator is used for example, which absorbs light in the UV-B range (ca. 280nm - 320nm). In addition, in this variant, a low-pass filter is used, which is designed and arranged such that only light of a wavelength above the threshold wavelength of the low-pass filter impinges the filter arranged in front of the photoreceiver or the photoinitiator in the starting material, respectively, wherein the threshold wavelength of the low-pass filter lies in the UV-B range and below the wavelength of the impinging light. The filter arranged in front of the photoreceiver is thereby formed as a narrow-band filter with a transmission above the threshold wavelength of the low-pass filter.

This variant is advantageous since short-wave light, which can lead to polymer degradation of the contact lens material and in addition also to accelerated ageing of the liquid light guide, is blocked from the beginning by the low-pass filter.

In addition, only that range of spectral absorption of the photoinitiator, which lies above the threshold wavelength of the low-pass filter, must be reproduced through the filter arranged in front of the photoreceiver, since light below this threshold wavelength cannot impinge at all on the starting material containing the photoinitiator (it is blocked by the low-pass filter) and therefore the sensitivity of the photoinitiator below the threshold wavelength of the low-pass filter does not play a role. This reduces the complexity of the structural design of the filter, since the photoinitiator typically absorbs not exclusively in the UV-B range, but partly also in the UV-C range. However, this range need no longer be "reproduced" by the filter, since owing to the low-pass filter being connected, light from this wavelength range can no longer impinge on the filter or the starting material containing the photoinitiator.

In addition, this variant allows the process to be more robust, especially if a light source is used, which emits light of a wavelength which is in fact in the UV-B range, that is, in the absorption range of the photoinitiator, but at a wavelength at which the absorption of the photoinitiator is relatively low. Then, of course, the length of time during which the contact lens material, which contains the photoinitiator, is exposed to light is not so critical as it would be when the light is of a wavelength at which the photoinitiator has e.g. its absorption maximum. Too great amounts of radiated light (light doses) can, of course, as already mentioned initially, on the one hand have an effect on the peripheral accuracy of the contact lens, so that at a wavelength at which the photoinitiator has a very high absorption coefficient, the critical amount of radiated light in respect of peripheral inaccuracies of the lens can be reached very rapidly, while at a wavelength at which the photoinitiator has a low absorption coefficient, this is correspondingly less time-critical. In addition, the polymerisation/crosslinking at a lower absorption of the photoinitiator is more uniform through the thickness of the contact lens material (starting material), because at low absorption only part of the radiated light is always absorbed in the uppermost "layer" of the contact lens material and thus sufficient light can always still reach the lower "layers" of the contact lens material and be absorbed there by the photoinitiator. Because of the uniform polymerisation/crosslinking of the contact lens material (starting material) effected in this way, stress in the contact lens can be avoided.

In a variant of the process according to the invention, a light source is used, in which the low-pass filter is structurally integrated. This variant is simple in construction and ensures that light of a wavelength below the threshold wavelength of the low-pass filter is constantly blocked, both when impinging on the filter and when impinging on the contact lens material containing the photoinitiator. In another variant of the process according to the invention, the low-pass filter is formed by optical components, e.g. lenses, which are made of a suitable material. These optical components are typically not a part of the light source.

In a further variant of the process according to the invention, a narrow-band filter with a plurality of individual filter elements is used. This simplifies the construction of the narrow-band filter, since various transmission characteristics of individual filter elements can be quasi superimposed and it is therefore simpler to attain the desired transmission of the filter.

As already mentioned initially, the process is especially advantageous if measurement of intensity of light of the prescribed wavelength, at which the photoinitiator absorbs, takes place during production of the mouldings, especially the contact lenses. In this way, it is possible during the production process to have on-line monitoring of the relevant amount of light, namely the amount of light of the wavelength at which the photoinitiator has its spectral absorption.

Furthermore, according to the invention, an apparatus is proposed for the production of mouldings, especially ophthalmic lenses, e.g. contact lenses, in which a broadband photoreceiver is provided to measure the intensity of light. A filter is arranged in front of this broadband photoreceiver, the transmission of which is designed such that the light passing through the filter and impinging on the photoreceiver corresponds in its intensity to the light absorbed by the photoinitiator on the basis of its spectral absorption at the wavelength from the predetermined wavelength range. The advantages of the relevant embodiment of the apparatus according to the invention correspond to the advantages mentioned in the corresponding process variants.

Thus, in an embodiment of the apparatus according to the invention, the device for exposing to light the starting material containing a photoinitiator in the mould, which absorbs in the UV range, comprises a UV light source.

In a further embodiment of the apparatus according to the invention, a low-pass filter is provided for a photoinitiator having an absorption in the UV-B range, this filter being designed and arranged such that only light of a wavelength above the threshold wavelength of the low-pass filter impinges the filter arranged in front of the photoreceiver or the photoinitiator in the starting material, respectively. The filter arranged in front of the photoreceiver is formed as a narrow-band filter with a transmission above the threshold wavelength of the low-pass filter. The advantages of this embodiment in respect of the simpler construction of the filter and the robustness of the process in the event that the light source emits light of a wavelength at which the photoinitiator does indeed absorb light but has only a low absorption coefficient, have already been explained in the corresponding process variant.

In a further embodiment of the apparatus according to the invention, the device for exposing the starting material to light can comprise a source of light in which the low-pass filter is structurally integrated. In another embodiment of the apparatus according to the invention, optical components such as lenses may be provided as low-pass filters, and these are made of a suitable material. The corresponding advantages of these embodiments have likewise already been explained in the corresponding process variant.

This applies in the same way to an embodiment of the apparatus according to the invention, in which the narrow-band filter comprises a plurality of individual filter elements.

Finally, in a further embodiment of the apparatus according to the invention, the device for measuring the intensity of light is designed and arranged such that the measurement of intensity takes place during the production of the mouldings.

Further advantageous aspects of the process according to the invention or of the apparatus according to the invention may be seen from the following explanation of embodiments of the invention with the aid of the drawings. These show:
- Fig. 1: an embodiment of a cyclical, clock-cycled process for the production of contact lenses,
- Figs. 2-4: an embodiment of a moulding tool for the production of contact lenses, in the opened state and after closing the moulding tool,
- Fig. 5: an embodiment of the type and manner in which light from a UV lamp is coupled into a light guide,
- Fig. 6: an embodiment of the type and manner in which light emerges from the light guide and impinges on the mould,
- Fig. 7: an embodiment of a device used to expose the starting material in the mould to UV light,
- Fig. 8: an embodiment of a closed moulding tool on a base plate for transporting the moulding tool under the light-exit ends of light guides, as well as a corresponding measuring device for measuring the intensity of light emerging from the light guides,
- Fig. 9: an embodiment of the sensor of the measuring device in an exploded view,
- Fig. 10: the sensor of Fig. 9 in the assembled view,
- Fig. 11: an example of the individual transmission curves of three filter elements of the filter of the sensor
and
- Fig. 12: the superimposed transmission curves of the filter elements of Fig. 11 together with the "absorption curve" ([1-T]-spectrum) of the photoinitiator.

The following explanation relates to an embodiment of a process for the production of contact lenses. The process according to the invention is especially suitable for the production of contact lenses, but should not be restricted to the production of contact lenses, nor to the cyclical clock-cycled process which is explained in more detail in the following by way of example.

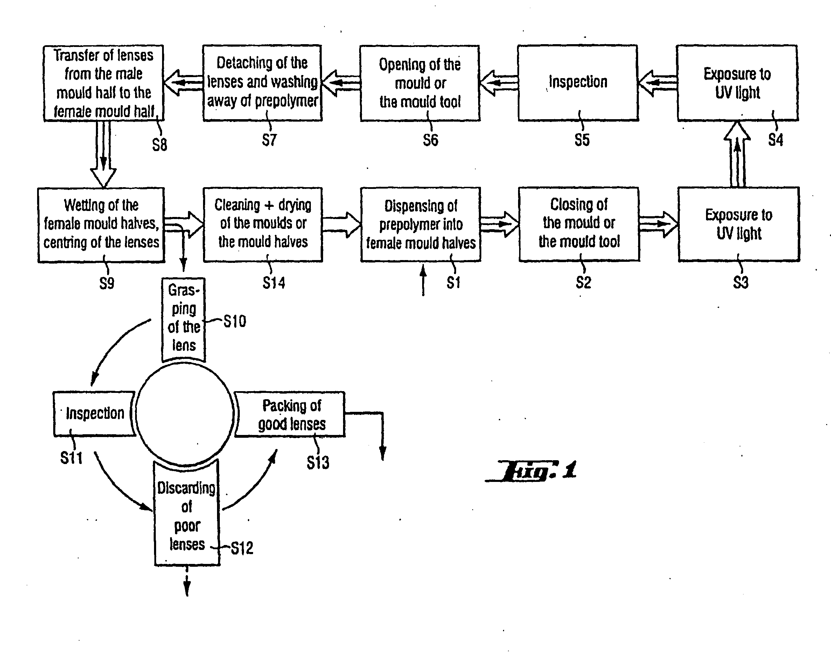

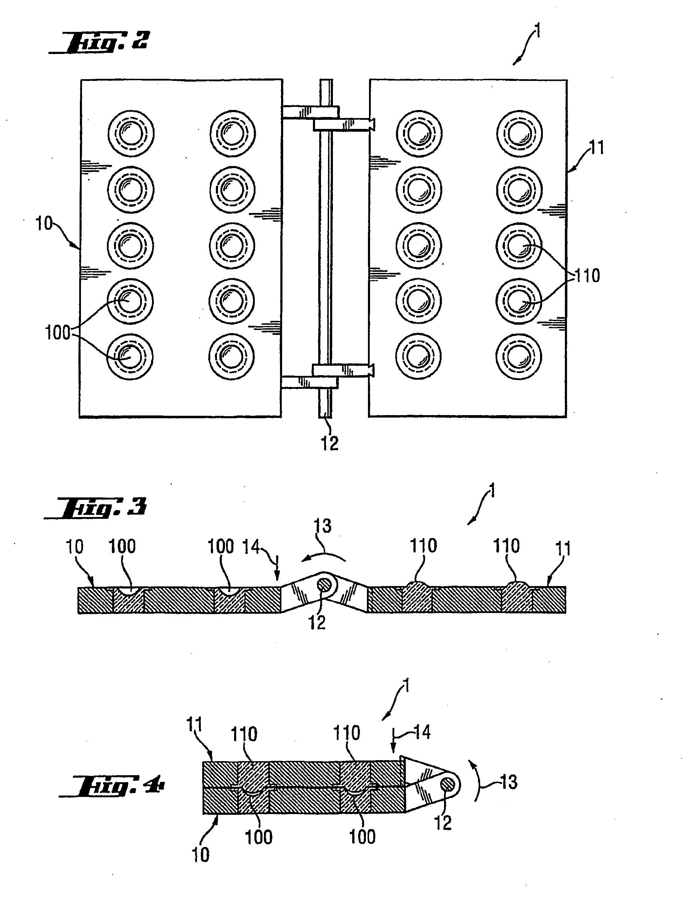

As already mentioned, Fig. 1 shows an embodiment of a cyclical clock-cycled process for the production of contact lenses. In a first step S1 of this cyclical clock-cycled process, the starting material, e.g. the prepolymer already mentioned initially, is dispensed into the female mould half or into a plurality of female mould halves. For example, a moulding tool 1 may be used, as illustrated in Fig. 2, having two tool halves 10 and 11. In one tool half 10, a number of female mould halves 100 are arranged, e.g. ten such female mould halves 100. In the other tool half 11, there are a number of male mould halves 110 corresponding to the number of female mould halves 100, in the case illustrated this is ten male mould halves 110.

In the following step S2, the moulding tool 1 is closed, whereby closure is effected first of all by a pivoting movement of the mould half 11 about the axis 12, as indicated by the arrow 13 in Fig. 3, and then by a linear movement, as indicated by the arrow 14 in Fig. 4. The moulding tool 1 is then in the closed position, as illustrated in Fig. 4.

The male mould halves 110 and relevant parts thereof are transparent to UV light. In a third step S3, the starting material (prepolymer) located in the cavity - that is, in the space between the male mould half 110 and the female mould half 100 is exposed to UV light, which results in polymerisation and/or crosslinking of the starting material. In a fourth step S4, the same procedure is repeated. The main reason for choosing two exposure steps S3 and S4 or exposing stations is that the cycle time of the cyclical clock-cycled process can be shortened. This is because, in principle, the slowest step determines the cycle time. On the other hand, it is necessary to expose the starting material to UV light of a specific intensity for a specific time period, in order to ensure adequate polymerisation and/or crosslinking of the starting material.

In a subsequent step S5, while the moulding tool 1 is still closed, a first inspection of the contact lenses still in the mounds is carried out. In this step S5, for example, the central area of the contact lenses can be examined for inclusions or other relatively coarse, easily perceptible defects.

In the following step S6, the moulding tool 1 is opened again, which takes place in reverse order of the closing process for the moulding tool described, in step S2.

In the next step S7, the male and female mould halves 110, 100 are sprayed e.g. with water, in order to effect detachment of the contact lenses and on the other hand to wash away excess uncrosslinked prepolymer from the contact lens and/or the mould half.

In the next step S8, the contact lenses are automatically transferred from the male mould half 110 to the female mould half 100. In many cases, when the moulding tool 1 is opened, the contact lens has remained in the female mound half 100, but in the majority of cases it remains adhering to the male mould half 110. Since, however, for the automated steps which follow, it must be ensured that the contact lens is in the female mould half 100, in step S8 the contact lenses are automatically transferred from the male to the female mould half. For those cases in which the contact lens is already in the female mould half, the transfer is attempted, but since in this instance the contact lens is already located in the female mould half, no transfer takes place. After step S8, it is ensured in any event that the contact lenses are located in the female mould half.

In step S9, the female mould halves 100 are moistened, for example with water, which simplifies centring of the contact lens in the female mould half 100, because in this way the contact lens can slide more easily into the centre of the female mould half 100. Centring of the lens is in turn important for the next step S10, because in this step the contact lens is grasped from the female mould half.

While the grasped contact lenses are inspected in a cyclical (secondary-)process in a step S11 after having been grasped in step S10, in particular to check whether the contact lens edge is satisfactory, the unsatisfactory contact lenses are discarded in a step S12. The satisfactory contact lenses, on the other hand, are placed in a package in step S13, which may optionally contain a preserving solution (e.g. saline).

After the contact lenses in step S10 have been removed from the female mould halves 100, the moulding tool 1 and the mould halves 100 and 110 arranged in the tool halves 10 and 11 can be rinsed e.g. with water in the cyclical (main) process in a step S14, and subsequently the cyclical (main) process can begin a new cycle again with step S1, the dispensing of prepolymer into the female mould halves 100.

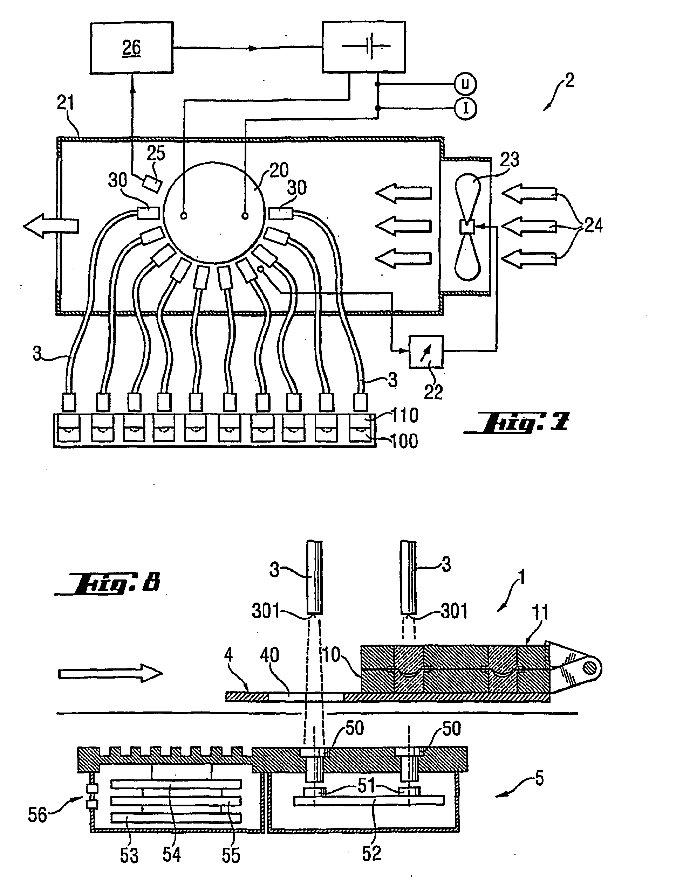

In Fig. 7, a device 2 for exposing the starting material located in the mould to UV light may be seen. This can be used in the above-described production process in steps S3 and S4 for exposing the starting material to UV light in order to polymerize and/or crosslink the starting material. The device 2 comprises a UV lamp 20 (operated on alternating voltage or alternating current), which is arranged in a housing 21. A plurality of light guides 3 is provided - here for example ten, and they are each arranged around the UV lamp 20 with a holder 30 and transport the light emitted by the lamp 20 to the individual moulds, which, for the sake of clarity, are illustrated side-by-side here. The light guides 3 will be described in more detail in the following.

Also visible in Fig. 7 is a temperature sensor 22, which measures the temperature close to the surface of the UV lamp 20 and, when a certain temperature is exceeded, activates a ventilator 23 which draws in cooling air 24 which is passed through the housing 21. In addition, a sensor 25 for measuring the intensity of the UV light can be provided, which passes a corresponding signal to a controller 26, which sets the UV lamp 20 in such a way that a specific desired intensity of UV light is provided as a general set point selection.

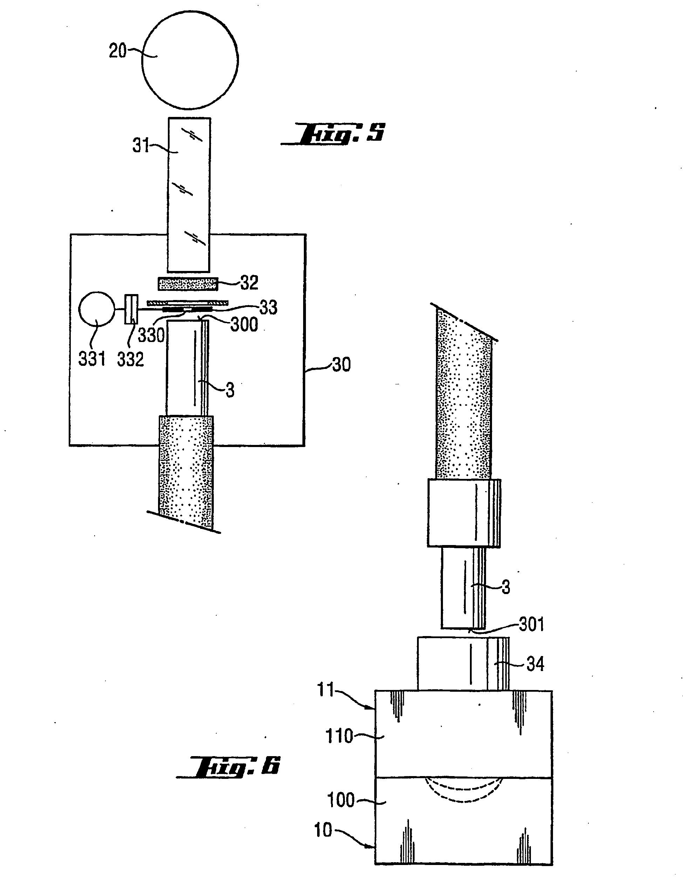

Fig. 5 illustrates an embodiment of the type and manner in which light from a UV lamp 20 is coupled into the light entry end 300 of a light guide 3, which then guides the UV light to the respective mould. The whole supply line for transporting the UV light from the UV lamp 20 comprises, in addition to the actual light guide 3, a quartz rod 31, a filter 32 (deep-pass filter), and a motor-driven adjustable diaphragm 33. The size of the diaphragm aperture 330 can be adjusted by a motor 331 and a flexible coupling 332. The light guide 3, which in this case is designed as a liquid light guide, is arranged downstream of the diaphragm 33. Liquid light guides are particularly suitable for guiding UV light, but do not withstand temperatures as high as those prevailing in the direct vicinity of the UV lamp 20. For this reason, the quartz rod 31 is provided, which although not flexible, withstands the temperatures in the direct vicinity of the UV lamp 20 and also is transparent to UV light. The above-described coupling of UV light into the respective light guide 3 light takes place in the holder 30, and the said light guide then guides the UV light to the respective mould. The low-pass filter 32 blocks light components below the cut-off wavelength, preferably UV light of a shorter wavelength than the UV-B range, in which e.g. the photoinitiators absorb, the photoinitiators serving to initiate crosslinking and/or polymerisation of the prepolymer. It is advantageous to have a low-pass filter 32 of this kind directly before coupling into the liquid light guides (that is, as an integral part of the light source), because on the one hand the blocked short wavelengths could lead to accelerated ageing of the liquid light guides 3, and on the other hand, the low-pass filter 32 by blocking the short wavelengths also prevents polymer degradation of the contact lens material insofar as the liquid light guides allow this light to pass through at all.

Fig. 6 shows an embodiment of the type and manner in which UV light emerges from the light guide 3 and impinges on the mould. The UV light emerging from the light exiting end 301 of the light guide 3 impinges, in this instance through a condenser 34, on the starting material located in the mould between the male mould half 110 and the female mould half 100, so that a contact lens is formed, as illustrated by the dashed line in Fig. 6. Basically, it is also conceivable for the optical elements such as the lenses of the condenser 34 to be made of a suitable material and to act as low-pass filters. Of course, in this way, the ageing of the liquid light guides will not be prevented, since the short-wave UV light is only cut off by the diaphragm after having passed the liquid light guide.

Fig. 8 shows an embodiment of a closed moulding tool 1 with the tool halves 10 and 11 on a base plate 4 for transporting the moulding tool 1 underneath the light exiting ends of light guides 3, as well as a corresponding measuring device 5 to measure the intensity of UV light emerging from the light guides 3. The light guides 3 are arranged such that, when the base plate 4 is in the rest position within a cycle, the emerging UV light acts on the starting material through the male mould half 110 located in the tool half 11. As the base plate 4 is transported away together with the moulding tool 1 after exposure to the light, a gap 40 in the base plate 4 comes to lie between the light guides 3 and the measuring device 5 (of course, given an appropriate configuration of the base plate 4 - arrangement of the gap 40 - this could alternatively take place as it is transported into position). The UV light emerging from the light exiting ends 301 of the light guides 3 then acts e.g. through attenuators 50 on light-sensitive sensors 51, arranged on a detector plate 52. While the base plate 4 is in the rest position - that is, while the starting material in the mould is exposed to UV light within a cycle- the UV light passing through the female mould half 100 located in the tool half 10 is similarly received by the measuring device 5. Since this transmitted light, however, can only be used to a limited extent to measure intensity, it can for example be used to check the mould for contamination etc. Furthermore, the measuring device 5 also contains an electronics part, in which a main printed circuit board 53, a processing printed circuit board 54 and an analogue/digital printed circuit board 55 are provided. On the front panel 56, a network connection (e.g. Ethernet), a serial interface (e.g. RS 232) and a connection to the voltage supply may be provided in particular, also an interface data transmission and/or control signal transmission to the system process control (SPS) and a status indicator of the unit.

How the intensity and therefore the amount of light are basically measured is described more fully, for example, in EP-A-1,314,527, and there is therefore no need for further explanation here.

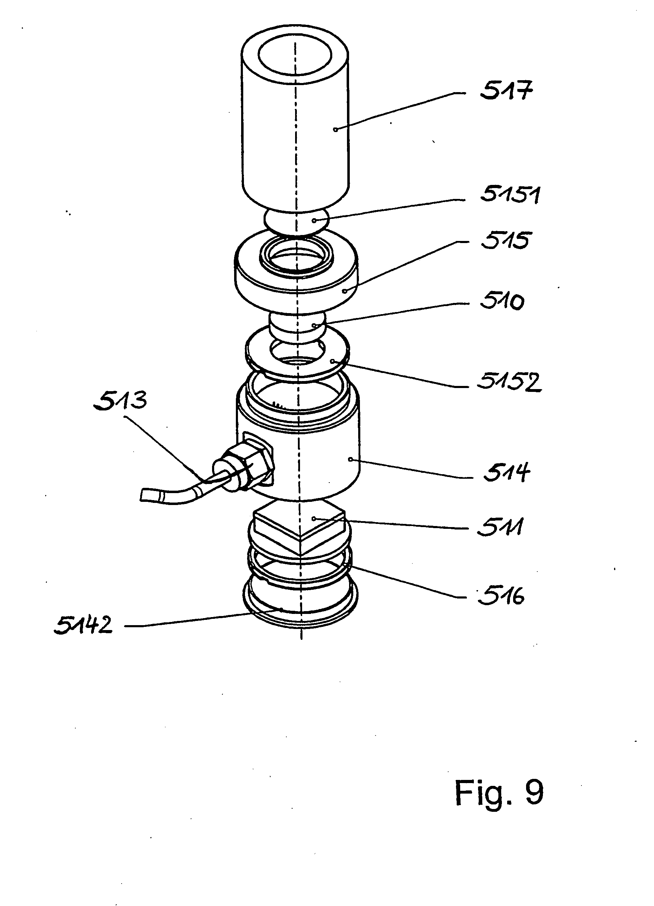

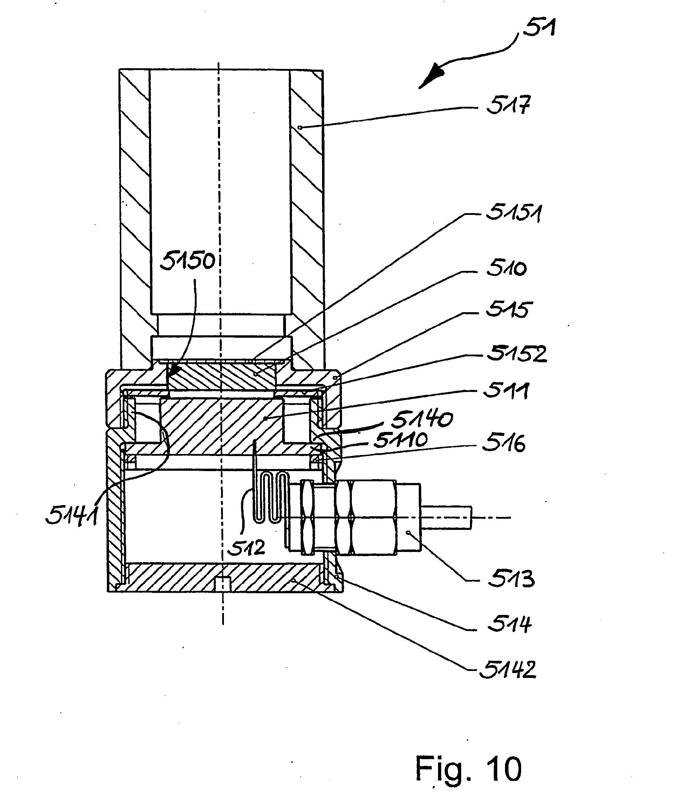

The light-sensitive sensors 51 discussed already in Fig. 8 may be of various designs. One embodiment of such a sensor 51 is illustrated in Fig. 9 in an exploded view and in Fig. 10 in an assembled view. Essential components of the sensor are a filter, here formed as a filter pack 510, as well as a broadband photoreceiver, here in the form of a sensor circuit board 511. The sensor circuit board 511 is connected by an internal cable 512 to a fixed terminal 513 (e.g. a BNC socket) for an external cable (e.g. coaxial cable), which is located in a sensor housing 514.

The sensor housing 514 has an inwardly protruding rotary projection 5140, against which a stop face 5110 of the sensor circuit board 511 rests in the assembled state (Fig. 10) and which is held by a clamping ring 516. The clamping ring 516 has an external thread. To assemble it, the sensor circuit board 511 is inserted into the sensor housing 514 and the clamping ring 516 is screwed into the internal thread of the sensor housing 514 until it clamps the already discussed stop face 5110 of the sensor circuit board 511 against the projection 5140. At its upper end, the sensor housing 514 also has a cylindrical extension 5141, which has an external thread. At the bottom, the sensor housing 514 is sealed by a screw-on lid 5142.

In addition, the sensor contains a filter housing 515, in which the filter pack 510 is located. The filter pack 510 is located in an aperture 5150, which is sealed up from the top by a glass lid 5151. The filter housing 515 likewise has an internal thread. A filter clamping ring 5152 is screwed into this internal thread, and from the bottom fixes the filter pack 510 at the desired location. The filter housing 515 pre-assembled with the fixed filter pack is then screwed onto the external thread on the cylindrical extension 5141 of the sensor housing 514.

A sleeve 517 is placed on a cylindrical extension 5153 of the filter housing 515, and is identical to the sleeve which accomodates e.g. the male mould half when producing the contact lenses, and through which to the contact lens material is then exposed to light.

The described embodiment of the sensor 51 is - as already mentioned - only one embodiment of how a sensor can be designed. It is also conceivable to use a corresponding sensor, as disclosed for example with the aid of Figs. 8 to 10 and the associated description in EP-A-1,314,527 and which is incorporated by reference as forming a part of the invention.

Photoinitiators as used, for example, together with the described prepolymers, and as described, for example, in EP-A-0 790 258, still absorb significantly in the range above 300 nm, even if the absorption maximum lies considerably below 300 nm. The sensor circuit board 511, which here serves as the photoreceiver, has broadband sensitivity, i.e. it is sensitive at least over the wavelength range of ultraviolet light and frequently also over the wavelength range of visible light. However, the sensor should reproduce as precisely as possible the behaviour of the photoinitiator, which only absorbs at a specific wavelength in the long-wave UV range.

For this reason, the filter pack 510 functioning as the filter preferably consists of a plurality of filter elements, which have varying transmission in different wavelength ranges. By superimposing the transmission characteristics of the individual filter elements, the desired narrow-band filter can be obtained. The filter - here the filter pack 510 - can thus comprise a total of three filter elements, in order to obtain as precisely as possible a reproduction of how the photoinitiator "sees" the light to which it is exposed in the prepolymer (starting material).

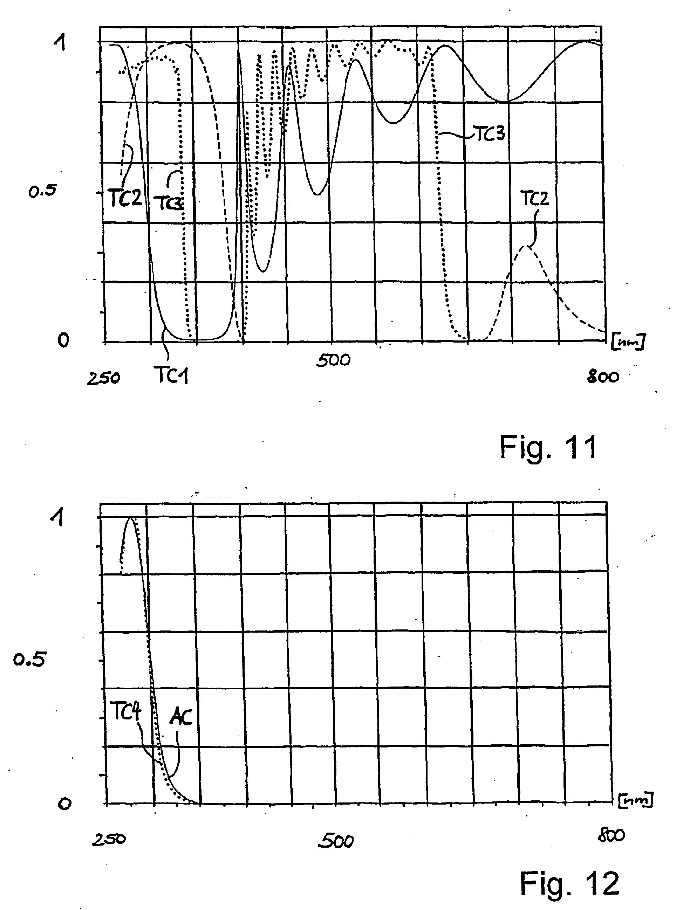

One example of transmission curves of the individual filter elements can be seen from Fig. 11, whereby the abscissa illustrates the wavelength in nm and the ordinate illustrates the standardised transmission of the individual filter elements (0 = opaque, 1 = transmissive). The individual transmission curves are illustrated by a continuous line TC1, a dashed line TC2 and a dotted line TC3.

The superimposing of these transmission curves together with the "absorption curve" ([1-T] - curve, T = transmission) of the photoinitiator can be seen from Fig. 12. The abscissa again illustrates the wavelength in nm and the ordinate illustrates the standardised transmission TC4 of the filter (super-position of the transmission of the individual filter elements according to Fig. 11), which is illustrated in a dotted line, or the standardised absorption AC of the photoinitiator, which is illustrated in a continuous curve (as a reminder: the filter must have transmission which corresponds as precisely as possible to the absorption of the photoinitiator, so that the photoreceiver "sees" the transmitted light exactly as the photoinitiator does).

## Claims

1. Process for the production of mouldings, especially ophthalmic lenses such as contact lenses, in which a starting material which contains a photoinitiator with a spectral absorption (AC) in a given wavelength range is exposed to a predefined amount of light of a wavelength from this given wavelength range, whereupon polymerisation and/or crosslinking of the starting material is initiated, and in this way a demouldable moulding is formed, and in which process the intensity of light is measured, **characterised in that** a broadband photoreceiver (511) is used to measure the intensity of light, in front of which photoreceiver a filter (510) is arranged, the transmission (TC1,TC2,TC3;TC4) of which is designed such that the light passing through the filter (510) and impinging on the photoreceiver (511) corresponds in its intensity to the light absorbed by the photoinitiator based on its spectral absorption (AC) at the wavelength from the given wavelength range.

2. Process according to claim 1, in which a photoinitiator is used, which absorbs light in the UV range and in which the light is UV light.

3. Process according to claim 2, in which a photoinitiator is used, which absorbs light in the UV-B range, and in which a low-pass filter (32,34) is used, which is designed and arranged such that only light of a wavelength above the threshold wavelength of the low-pass filter impinges the filter (510) arranged in front of the photoreceiver (511) or the photoinitiator in the starting material, respectively, whereinthe threshold wavelength of the low-pass filter (32,34) lies in the UV-B range and below the wavelength of the impinging light , and in which the filter (510) arranged in front of the photoreceiver (511) is formed as a narrow-band filter having a transmission above the threshold wavelength of the low-pass filter (32,34).

4. Process according to claim 3, in which a light source (20) is used, in which the low-pass filter (32) is structurally integrated.

5. Process according to claim 3, in which the low-pass filter is formed by optical components (34), e.g. lenses, which are made of a suitable material.

6. Process according to any one of claims 3 to 5, in which a narrow-band filter with a plurality of individual filter elements is used.

7. Process according to any one of the preceding claims, in which a light source (20) is used, which emits light in a wavelength at which the photoinitiator does indeed absorb light but has only a low absorption coefficient.

8. Process according to any one of the preceding claims, in which measurement of the intensity of light of a predetermined wavelength takes place during production of the mouldings.

9. Apparatus for the production of mouldings, especially ophthalmic lenses, such as contact lenses, comprising a mould (100,110) and a device for introducing a starting material into the mould, wherein the starting material contains a photoinitiator having a spectral absorption (AC) in a predetermined wavelength range, and further comprising a device (2) for exposing the starting material located in the mould to a predefined amount of light of a wavelength from the predetermined wavelength range in which the photoinitiator absorbs, which initiates polymerisation and/or crosslinking of the starting material, so that a demouldable moulding is obtained, and finally comprising a device (5) for measuring the intensity of light, **characterised in that** in order to measure the intensity of the emitted light, a broadband photoreceiver (511) is provided, in front of which a filter (510) is arranged , the transmission (TC1,TC2,TC3;TC4) of which is designed such that the light passing through the filter (510) and impinging on the photoreceiver (511) corresponds in its intensity to the light absorbed by the photoinitiator based on its spectral absorption (AC) at the wavelength from the given wavelength range.

10. Apparatus according to claim 9, in which the device (2) for exposing to light the starting material in the mould containing a photoinitiator which absorbs in the UV range, comprises a UV light source (20).

11. Apparatus according to claim 10, in which a low-pass filter (32,34) is provided for a photoinitiator having an absorption (AC) within the UV-B range, the filter being designed and arranged such that only light of a wavelength above the threshold wavelength of the low-pass filter (32,34) impinges the filter (510) arranged in front of the photoreceiver (511) or the photoinitiator in the starting material, respectively, wherein the threshold wavelength of the low-pass filter lies in the UV-B range and below the wavelength of the impinging light, and in which the filter (510) arranged in front of the photoreceiver (511) is formed as a narrow-band filter having a transmission above the threshold wavelength of the low-pass filter.

12. Apparatus according to claim 11, in which the device for exposing the starting material with light comprises a light source (20), in which the low-pass filter (32) is structurally integrated.

13. Apparatus according to claim 11, in which optical components (34), such as lenses, which are made of a suitable material, are provided as low-pass filter.

14. Apparatus according to any one of claims 11 to 13, in which the narrow-band filter comprises a plurality of individual filter elements.

15. Apparatus according to any one of claims 9 to 14, which comprises a light source (20), which emits light of a wavelength at which the photoinitiator does indeed absorb light but has only a low absorption coefficient.

16. Apparatus according to any one of claims 9 to 15, in which the device (5) for measuring the intensity of light is designed and arranged such that the measurement of intensity takes place during the production of the mouldings.

## Patentansprüche

1. Verfahren zur Herstellung von Formlingen, insbesondere ophthalmischen Linsen, wie Kontaktlinsen, bei welchem ein Ausgangsmaterial, das einen Fotoinitiator mit einer Spektralabsorption (AC) in einem gegebenen Wellenlängenbereich enthält, einer vordefinierten Lichtmenge einer Wellenlänge aus diesem gegebenen Wellenlängenbereich ausgesetzt wird, wodurch eine Polymerisation und/oder Vernetzung des Ausgangsmaterials ausgelöst wird, und auf diese Weise ein entformbarer Formling gebildet wird, und bei welchem Verfahren die Lichtintensität gemessen wird, **dadurch gekennzeichnet, dass** ein Breitbandfotoempfänger (511) verwendet wird, um die Lichtintensität zu messen, wobei vor dem Fotoempfänger ein Filter (510) angeordnet ist, dessen Durchlässigkeit (TC1, TC2, TC3; TC4) derart ausgelegt ist, dass das durch das Filter (510) hindurch tretende und auf den Fotoempfänger (511) auftreffende Licht in seiner Intensität dem durch den Fotoinitiator aufgrund seiner Spektralabsorption (AC) bei der Wellenlänge aus dem gegebenen Wellenlängenbereich absorbierten Licht entspricht.

2. Verfahren nach Anspruch 1, bei welchem ein Fotoinitiator verwendet wird, der Licht im UV-Bereich absorbiert, und bei welchem das Licht UV-Licht ist.

3. Verfahren nach Anspruch 2, bei welchem ein Fotoinitiator verwendet wird, der Licht im UV-B-Bereich absorbiert, und wobei ein Tiefpassfilter (32, 34) verwendet wird, das derart ausgelegt und angeordnet ist, dass nur Licht einer Wellenlänge oberhalb der Schwellenwertwellenlänge des Tiefpassfilters auf das vor dem Fotoempfänger (511) angeordnete Filter (510) bzw. den Fotoinitiator in dem Ausgangsmaterial auftrifft, wobei die Schwellenwertwellenlänge des Tiefpassfilters (32, 34) im UV-B-Bereich und unterhalb der Wellenlänge des auftreffenden Lichts liegt, und wobei das vor dem Fotoempfänger (511) angeordnete Filter (510) als Schmalbandfilter mit einer Durchlässigkeit oberhalb der Schwellenwertwellenlänge des Tiefpassfilters (32, 34) ausgebildet ist.

4. Verfahren nach Anspruch 3, bei welchem eine Lichtquelle (20) verwendet wird, in welche das Tiefpassfilter (32) baulich integriert ist.

5. Verfahren nach Anspruch 3, bei welchem das Tiefpassfilter durch optische Komponenten (34), zum Beispiel Linsen, gebildet wird, die aus einem geeigneten Material hergestellt sind.

6. Verfahren nach einem der Ansprüche 3 bis 5, bei welchem ein Schmalbandfilter mit einer Vielzahl einzelner Filterelemente verwendet wird.

7. Verfahren nach einem der vorangehenden Ansprüche, bei welchem eine Lichtquelle (20) verwendet wird, die Licht bei einer Wellenlänge emittiert, bei der der Fotoinitiator zwar Licht absorbiert, jedoch nur einen niedrigen Absorptionskoeffizienten aufweist.

8. Verfahren nach einem der vorangehenden Ansprüche, bei welchem die Messung der Lichtintensität bei einer vorbestimmten Wellenlänge während der Herstellung der Formlinge stattfindet.

9. Vorrichtung für die Herstellung von Formlingen, insbesondere ophthalmischen Linsen, wie Kontaktlinsen, umfassend eine Form (100, 110) und eine Einrichtung zum Einbringen eines Ausgangsmaterials in die Form, wobei das Ausgangsmaterial einen Fotoinitiator mit einer Spektralabsorption (AC) in einem vorbestimmten Wellenlängenbereich enthält, und weiterhin umfassend eine Einrichtung (2) zum Aussetzen des in der Form angeordneten Ausgangsmaterials einer vordefinierten Lichtmenge einer Wellenlänge aus dem vorbestimmten Wellenlängenbereich, in welchem der Fotoinitiator absorbiert, was eine Polymerisation und/oder Vernetzung des Ausgangsmaterials auslöst, sodass ein entformbarer Formling erhalten wird, und schließlich umfassend eine Einrichtung (5) zum Messen der Lichtintensität, **dadurch gekennzeichnet, dass** zum Messen der Intensität des emittierten Lichtes ein Breitbandfotoempfänger (511) vorgesehen ist, vor dem ein Filter (510) angeordnet ist, dessen Durchlässigkeit (TC1, TC2, TC3, TC4) derart ausgelegt ist, dass das Licht, das durch das Filter (510) hindurch tritt und auf den Fotoempfänger (511) auftrifft, in seiner Intensität dem durch den Fotoinitiator aufgrund seiner Spektralabsorption (AC) bei der Wellenlänge aus dem gegebenen Wellenlängenbereich absorbierten Licht entspricht.

10. Vorrichtung nach Anspruch 9, bei welcher die Einrichtung (2) zum Aussetzen des Ausgangsmaterials in der Form, das einen im UV-Bereich absorbierenden Fotoinitiator enthält, eine UV-Lichtquelle (20) umfasst.

11. Vorrichtung nach Anspruch 10, bei welcher ein Tiefpassfilter (32, 34) vorgesehen ist für einen Fotoinitiator mit einer Absorption (AC) innerhalb des UV-B-Bereichs, wobei das Filter derart ausgelegt und angeordnet ist, dass nur Licht einer Wellenlänge oberhalb der Schwellenwertwellenlänge des Tiefpassfilters (32, 34) auf das vor dem Fotoempfänger (511) angeordneten Filter (510) bzw. dem Fotoinitiator im Ausgangsmaterial auftrifft, wobei die Schwellenwertwellenlänge des Tiefpassfilters im UV-B-Bereich und unterhalb der Wellenlänge des auftreffenden Lichtes liegt, und wobei das vor dem Lichtempfänger (511) angeordnete Filter (510) als Schmalbandfilter mit einer Durchlässigkeit oberhalb der Schwellenwertwellenlänge des Tiefpassfilters ausgebildet ist.

12. Vorrichtung nach Anspruch 11, bei welcher die Einrichtung zum Aussetzen des Ausgangsmaterials mit Licht eine Lichtquelle (20) umfasst, in welche der Tiefpassfilter (32) baulich integriert ist.

13. Vorrichtung nach Anspruch 11, bei welcher optische Komponenten (34), wie Linsen, die aus einem geeigneten Material hergestellt sind, als Tiefpassfilter vorgesehen sind.

14. Vorrichtung nach einem der Ansprüche 11 bis 13, bei welcher das Schmalbandfilter eine Vielzahl einzelner Filterelemente umfasst.

15. Vorrichtung nach einem der Ansprüche 9 bis 14, welche eine Lichtquelle (20) umfasst, die Licht einer Wellenlänge emittiert, bei der der Fotoinitiator zwar Licht absorbiert, jedoch nur einen niedrigen Absorptionskoeffizienten aufweist.

16. Vorrichtung nach einem der Ansprüche 9 bis 15, bei welcher die Einrichtung (5) zum Messen der Lichtintensität deart ausgebildet und angeordnet ist, dass die Messung der Intensität während der Herstellung der Formlinge stattfindet.

## Revendications

1. Procédé pour la production de moulages, notamment de lentilles ophtalmiques telles que des lentilles de contact, selon lequel un matériau de départ, qui contient un photoinitiateur ayant une absorption spectrale (AC) dans une gamme de longueurs d'onde donnée, est exposé à une quantité prédéfinie de lumière d'une longueur d'onde appartenant à cette gamme de longueurs d'onde donnée, sur quoi une polymérisation et/ou une réticulation du matériau de départ est déclenchée et, de cette manière, un moulage, apte à être démoulé, est formé, procédé selon lequel l'intensité de la lumière est mesurée, **caractérisé en ce qu'**un photorécepteur à large bande (511) est utilisé pour mesurer l'intensité de la lumière, photorécepteur en face duquel est disposé un filtre (510), dont la transmission (TC1, TC2, TC3 ; TC4) est étudiée pour que la lumière passant à travers le filtre (510) et tombant sur le photorécepteur (511), corresponde, dans son intensité, à la lumière absorbée par le photoinitiateur, sur la base de son absorption spectrale (AC) à la longueur d'onde appartenant à la gamme de longueurs d'onde donnée.

2. Procédé suivant la revendication 1, selon lequel on utilise un photoinitiateur qui absorbe de la lumière dans la gamme des UV et selon lequel la lumière est de la lumière ultraviolette.

3. Procédé suivant la revendication 2, selon lequel on utilise un photoinitiateur qui absorbe de la lumière dans la gamme des UV-B, et selon lequel on utilise un filtre passe-bas (32, 34), qui est conçu et positionné de telle façon que seule de la lumière d'une longueur d'onde au-dessus de la longueur d'onde de seuil du filtre passe-bas, tombe sur le filtre (510) disposé en face du photorécepteur (511) ou du photoinitiateur dans le matériau de départ, respectivement, la longueur d'onde de seuil du filtre passe-bas (32, 34) se situant dans la gamme des UV-B et en dessous de la longueur d'onde de la lumière incidente, et selon lequel le filtre (510), disposé en face du photorécepteur (511), est réalisé sous forme d'un filtre à bande étroite, ayant une transmission au-dessus de la longueur d'onde de seuil du filtre passe-bas (32, 34).

4. Procédé suivant la revendication 3, selon lequel on utilise une source de lumière (20) dans laquelle le filtre passe-bas (32) est intégré structurellement.

5. Procédé suivant la revendication 3, selon lequel le filtre passe-bas est formé par des composants optiques (34), par exemple des lentilles, qui sont réalisés en un matériau approprié.

6. Procédé suivant l'une quelconque des revendications 3 à 5, selon lequel on utilise un filtre à bande étroite comprenant plusieurs éléments de filtre individuels.

7. Procédé suivant l'une quelconque des revendications précédentes, selon lequel on utilise une source de lumière (20) qui émet de la lumière dans une longueur d'onde à laquelle le photoinitiateur absorbe bien la lumière, mais n'a qu'un faible coefficient d'absorption.

8. Procédé suivant l'une quelconque des revendications précédentes, selon lequel la mesure de l'intensité de lumière d'une longueur d'onde prédéterminée a lieu durant la production des moulages.

9. Appareil pour la production de moulages, notamment de lentilles ophtalmiques, telles que des lentilles de contact, comprenant un moule (100, 110) et un dispositif pour introduire un matériau de départ dans le moule, le matériau de départ contenant un photoinitiateur ayant une absorption spectrale (AC) dans une gamme de longueurs d'onde prédéterminée, et comprenant, en outre, un dispositif (2) pour exposer le matériau de départ, placé dans le moule, à une quantité prédéfinie de lumière d'une longueur d'onde appartenant à la gamme de longueurs d'onde prédéterminée dans laquelle le photoinitiateur absorbe, ce qui déclenche une polymérisation et/ou une réticulation du matériau de départ, de sorte qu'un moulage, apte à être démoulé, est obtenu, et comprenant enfin un dispositif (5) pour mesurer l'intensité de la lumière, **caractérisé en ce que** pour mesurer l'intensité de la lumière émise, il est prévu un photorécepteur à large bande (511), en face duquel est disposé un filtre (510), dont la transmission (TC1, TC2, TC3 ; TC4) est étudiée pour que la lumière passant à travers le filtre (510) et tombant sur le photorécepteur (511), corresponde, dans son intensité, à la lumière absorbée par le photoinitiateur, sur la base de son absorption spectrale (AC) à la longueur d'onde appartenant à la gamme de longueurs d'onde donnée.

10. Appareil suivant la revendication 9, dans lequel le dispositif (2) pour exposer à de la lumière, le matériau de départ présent dans le moule, qui contient un photoinitiateur absorbant dans la gamme des UV, comprend une source de lumière ultraviolette (20).

11. Appareil suivant la revendication 10, dans lequel un filtre passe-bas (32, 34) est prévu pour un photoinitiateur ayant une absorption (AC) à l'intérieur de la gamme des UV-B, le filtre étant conçu et positionné de telle façon que seule de la lumière d'une longueur d'onde au-dessus de la longueur d'onde de seuil du filtre passe-bas (32, 34), tombe sur le filtre (510) disposé en face du photorécepteur (511) ou du photoinitiateur dans le matériau de départ, respectivement, la longueur d'onde de seuil du filtre passe-bas se situant dans la gamme des UV-B et en dessous de la longueur d'onde de la lumière incidente, et dans lequel le filtre (510), disposé en face du photorécepteur (511), est réalisé sous forme d'un filtre à bande étroite, ayant une transmission au-dessus de la longueur d'onde de seuil du filtre passe-bas.

12. Appareil suivant la revendication 11, dans lequel le dispositif pour exposer le matériau de départ à de la lumière, comprend une source de lumière (20) dans laquelle le filtre passe-bas (32) est intégré structurellement.

13. Appareil suivant la revendication 11, dans lequel des composants optiques (34), tels que des lentilles, qui sont réalisés en un matériau approprié, sont prévus comme filtre passe-bas.

14. Appareil suivant l'une quelconque des revendications 11 à 13, dans lequel le filtre à bande étroite comprend plusieurs éléments de filtre individuels.

15. Appareil suivant l'une quelconque des revendications 9 à 14, qui comprend une source de lumière (20) émettant une lumière d'une longueur d'onde à laquelle le photoinitiateur absorbe bien de la lumière, mais n'a qu'un faible coefficient d'absorption.

16. Appareil suivant l'une quelconque des revendications 9 à 15, dans lequel le dispositif (5) pour mesurer l'intensité de lumière est conçu et positionné de telle façon que la mesure d'intensité ait lieu durant la production des moulages.
